# EUROPEAN PATENT SPECIFICATION

(11) **EP 0 574 625 B1**
(45) Date of publication and mention of the grant of the patent: **05.11.1997**
(21) Application number: 92305601.4
(22) Date of filing: 18.06.1992
(51) Int. Cl.: B32B 17/10, C03C 27/12, C03C 17/38

(54) **A heat ray reflecting glass structure**
Wärmestrahlen reflektierende Glaskonstruktion
Structure de verre reflectants des rayons thermiques

(43) Date of publication of application: 22.12.1993
(73) Proprietor: Lin, Chii-Hsiung, Taiwan (TW)
(72) Inventor: Lin, Chii-Hsiung, Taiwan (TW)
(74) Representative: Gordon, Michael Vincent

(56) References cited:
- EP-A- 0 396 449
- EP-A- 0 478 836
- WO-A-87/07594
- DD-A- 86 689

## Description

This invention relates to a heat ray (infrared) reflecting glass structure which, at least in preferred embodiments, can have high heat insulation, high luminosity and monodirectional reflection while eliminating the duplicated virtual images or distorted static images often seen hitherto.

Conventional heat ray reflecting laminated safety glass, widely used for the curtain walls of buildings, is made by using strong adhesives to secure together two sheets of plate glass substrate having a desired thickness into a laminate structure, wherein an inner surface of the outwardly-facing plate glass substrate is plated, coated or otherwise treated with a metal or metallic oxide heat ray reflecting layer by conventional methods such as vacuum deposition, electroless plating, or thermal decomposition oxidisation.

The outwardly-facing plate glass substrate may be transparent or translucent (coloured), and the inwardly-facing plate glass substrate, which may in particular applications be replaced by polyester or polycarbonate, may similarly be transparent or translucent (coloured).

The reflecting rate of conventional metal or metallic oxide reflecting film coated on the inner surface of the aforesaid outer plate glass substrate is generally about 12% to 50%, and a polymeric resin laminating adhesive layer in-between the two substrates is generally about 0.01 mm to 3 mm in thickness, so the curtain wall becomes mirror-like when viewed from the outside of the building. However, since the glass sheets and resin adhesive layer possess different reflecting rates of 1.52 and 1.48 to 1.6, respectively, a daze or visual compression will usually arise from the duplicated virtual image or distorted static image brought out by the discrepancy of reflective indices among materials of different densities and the uneven surface of the glass sheets. This phenomenon will especially deteriorate further when outdoors is brighter than indoors or the intermediate adhesive layer is thicker. Such problems for the human eye have in the past been relieved only by using dark-coloured heat-absorbing glass for the inner plate glass substrate to reduce or cover indoor images on the reflecting film or the dazzling lights. In other words, there is not yet another effective means for overcoming or solving such disadvantages as the above-mentioned duplicated virtual image on conventional heat ray reflecting laminated safety glass.

Currently, the transparency rate is maintained within the range of 40% to 8% for interior lighting while the heat ray reflecting rate is within the range from 12% to 50% because, in addition to the aforementioned disadvantages, the transparency rate for luminosity decreases as the reflecting rate of the metal or metallic oxide layer is increased to more than 50%, even though more energy for air conditioning is saved as a result of fewer solar rays passing through.

It becomes a most critical issue for those skilled in the art to find a way to obtain a more satisfactory reflecting rate as well as a transparency rate that is indirectly proportional thereto.

According to the present invention, a heat ray reflecting glass structure, comprising an outwardly-facing transparent or translucent glass substrate having an inner surface overlaid by a metal or metallic oxide layer, and an inwardly-facing transparent or translucent substrate of glass, polyester or polycarbonate secured thereto by an adhesive layer, is characterised in that:-
a) said metal or metallic oxide layer is composed of a plurality of individual regions arranged in an array or net;
b) a black or grey printing ink layer is composed of a plurality of individual regions corresponding to, and overlying, said individual regions of said metal or metallic oxide layer;
c) said inner surface of said outwardly-facing transparent or translucent glass substrate has regions corresponding to crevices between, and not overlaid by, said individual regions of said metal or metallic oxide layer and said individual regions of said black or grey printing ink layer; and
d) said adhesive layer has portions filling said crevices as well as portions overlying said individual regions of said black or grey printing ink layer.

Advantages of the present invention are that it can provide:-
a heat ray reflecting glass structure which has a high monodirectional reflection, high heat insulation and high luminosity with a reflecting rate and a transparency rate as high as 84% and 65%, respectively, which can be optionally adjusted depending upon various uses;
a heat ray reflecting glass structure without a duplicated virtual image or a distorted static image on the inner surface of the glass;
a heat ray reflecting glass structure having a thickness up to 50 mm for the intermediate adhesive layer, increased safety tightness, penetration resistance, and high net crack;
a heat ray reflecting glass structure wherein the intermediate adhesive layer may be admixed with ultraviolet absorbents for absorbing ultraviolet rays, or have embedded in it metallic wire or net making it theft-proof or explosion-proof, or wherein on the inner side the glass may be coloured or the polyester or polycarbonate plate may be decorated to match with interior decoration; and
a heat ray reflecting glass structure offering a high level of privacy, variety, and light-eliminated diffusion, as well as allowing high production rates with low defect level.

Preferably, the heat ray reflecting metal or metallic oxide layer is coated on the inner surface of the aforementioned outside glass, and is then overprinted by conventional screen printing, or coated, with the black or grey printing ink layer having intercrossing stripes or a net configuration composed of individual circular or hexagonal regions, and after the printing ink has dried, the metal or metallic oxide layer that has not been covered by the printing ink is removed by conventional electro-dissociation or washed by acid.

As indicated above, the printing ink layer is placed between the metal or metallic oxide layer with mirror-reflecting effect and the intermediate adhesive layer, which acts as a wall separating the glass structure of the invention into a monodirectional outward-reflecting mirror part and an inward-reflectiveless laminated glass part. Thus, the outward-facing glass becomes a monodirectional fully-reflecting mirror by changing the ratio of the sizes of the patterns of intercrossing stripes or net configuration to the crevice portion without coating, such as 9:1, 6.5:3.5 or 5:5; that is, the heat insulation and transparency may be optionally adjusted according to the desired use in a range of 84.5% to 6% for the heat reflecting rate and 3% to 65% for the transparency rate. Non-reflected light will pass through said crevices without reflecting coatings within the metal or metallic oxide and printing ink coating layers. There will therefore be no duplicated virtual images or distorted static images when the glass structure is looked through from the inside and the interior will be brightly illuminated by light which has passed through the glass structure.

The adhesive layer may be thickened up to about 50 mm, which is 30% more safe than conventional sheet glass with the same thickness as that of this invention, and the penetration resistance and high net crack as well as anti-rumble will approach 100% while its thickness is 50 mm. The outward-facing glass may be treated by a treatment having said intercrossing stripes or net configuration so an object will not be reflected thus rendering greater indoor privacy. Furthermore, as indicated above, the adhesive layer may be admixed with ultraviolet absorbent to absorb ultraviolet light rays, or embedded with steel wires or nets to make the glass structure more explosion-proof and theft-proof than conventionally used.

An example of a heat ray reflecting glass structure, in accordance with the present invention, and an example of the prior art, will now be described in greater detail, with reference to the accompanying drawings, in which:-
Fig. 1 shows a perspective view of the structure of a conventional heat ray reflecting laminated safety glass;
Fig. 2 shows a perspective view of a first embodiment of a heat ray reflecting glass structure in accordance with the present invention;
Fig. 3 shows, in different views, circular regions viewed from outside and inside, as well as the overall effect viewed from outside and inside;
Fig. 4 shows, in different views, hexagonal regions viewed from outside as well as inside;
Fig. 5 shows a cross-sectional view of a second embodiment of this invention; and
Fig. 6 shows a cross-sectional view of a third embodiment of this invention.

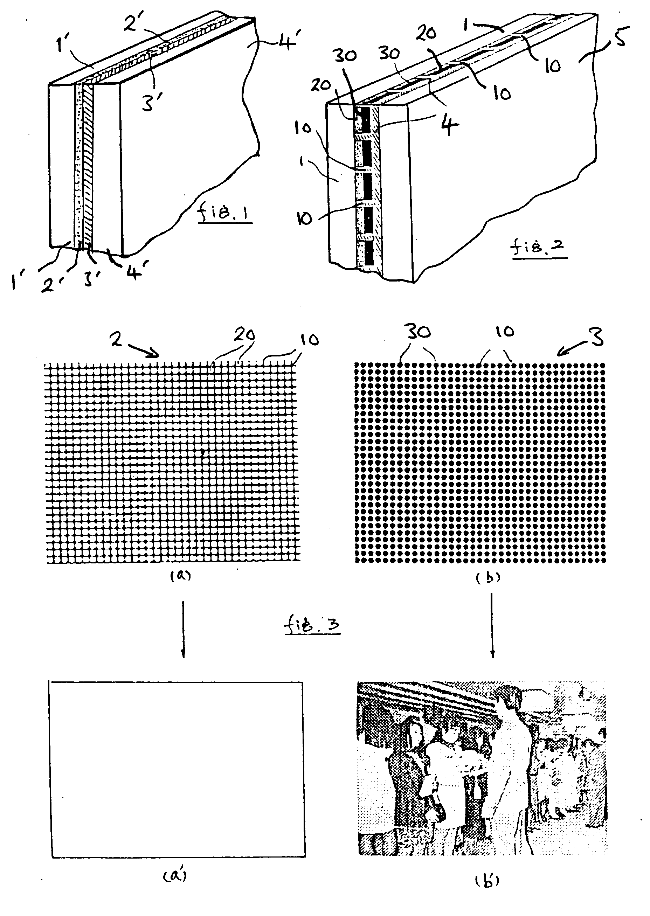

The conventional heat ray reflecting laminated safety glass shown in Fig. 1 includes two sheets of plate glass substrate, a first sheet of glass 1' to be exposed on the outside of a building and a second sheet of glass 4' to be exposed to the inside of a building, the inner side of plate 1' is conventionally coated or plated by a heat ray reflecting metal or metallic oxide layer 2' and an intermediate adhesive layer 3' is adhered thereto.

The structure may, more particularly, consist of: a transparent or light-coloured plate glass substrate 1' facing outward; a photo-transmission heat ray reflecting metal or metallic oxide coating layer 2' coated or plated in advance on the inward side of the aforesaid outward-facing plate glass substrate 1'; an intermediate laminate resin adhesive layer 3' inbetween the two plate glass substrates; and a plate glass substrate 4' which may be transparent or a dark-coloured heat ray absorbing glass facing inward.

In practical use the reflecting rate is in the range of 12% to 50% and the transparency rate is 40% to 8% due to the limitations of composition and processing; therefore, the higher the heat insulation, the lower the luminosity and vice versa, and the occurrence of such problems as the appearance of duplicated virtual images or distorted static images.

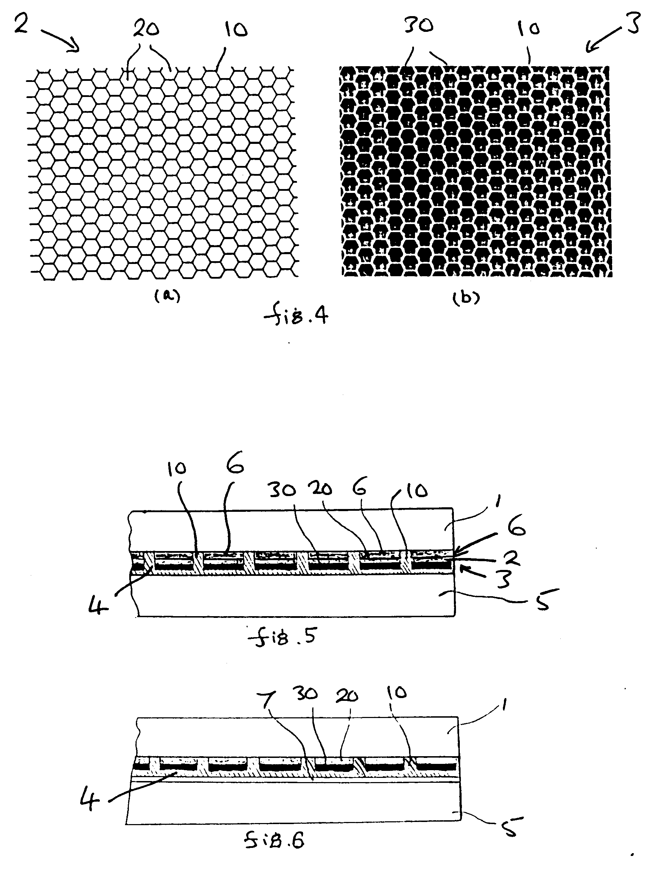

A first embodiment of the present invention is shown in Figs. 2-4.

Considering Fig. 3(a), a metal or metallic oxide mirror-reflective coating layer 2 is shown consisting of circles 20 or spots having a pattern of intercrossing stripes, as viewed from the outward-facing surface of plate glass substrate 1, and a transparent portion of crevices 10 (represented by the black lines shown on the drawing) without the above-mentioned coating. This is in fact a monodirectional mirror-reflecting diagram with transparent lines when viewed under the condition that the surfaces of the two sheets of glass are subject to the same luminosity. On the contrary, it would be a plain mirror without transparent lines as Fig. 3(a') provided that brightness differs when viewed from outside. Fig. 3(b) shows a black or grey printing ink coating layer 3 having a pattern of intercrossing stripes consisting of circles 30 or spots, as viewed from the inward-facing plate glass substrate 5. The white-coloured portion corresponds to the black lines of Fig. 3(a) which represent the transparent crevices 10. Light rays thus pass through and outdoor views as shown in Fig. 3(b') may be seen through such transparent crevices 10 when viewed from inside.

Similarly, Fig. 4(a) reveals a metallic oxide mirror-reflecting coating layer 2 having a net configuration composed of hexagonal regions 20, separated by transparent crevices 10 without said coating layer 2 on the inner surface of outward-facing plate glass substrate 1, and Fig. 4(b) shows white-coloured transparent crevices 10 and a black or grey printing ink coating 3 with hexagonal regions 30 seen from inward-facing plate glass substrate 5.

### Example 1

The outward-facing transparent plate glass substrate 1 is either a general or heat-treated reinforced glass of sodium calcium silicates or reinforced glass of sodium or potassium iron exchange. The metal or metallic oxide plating or coating layer 2, having orderly intercrossing stripes or a net configuration composed of solid circles or hexagons 20 which have a heat ray reflecting effect, is first plated or coated with a desired colour layer by conventional methods such as electroless plating, vacuum deposition, or thermal decomposition oxidisation in which the plating or coating layer 2 is selected from gold, silver, platinum, copper, tin, zinc, chromium, titanium, aluminium or nickel, or an alloy or an oxide thereof, and has a thickness ranging from 40 to 180 nm (400 to 1800 angstroms). The black or grey printing ink coating layer 3, printed or coated on the reflecting metal or metallic oxide coating layer 2, also has intercrossing stripes or a net configuration composed of solid circles or hexagons 30, in which the printing ink used can be made of a polyvinyl butyral resin, urethane resin, epoxy resin or methyl acrylate resin or a mixture thereof from 0.04 mm to 0.18 mm in thickness. Light-transmission crevices 10 are filled with the adhesive 4, selected from either a methyl acrylate resin adhesive, two- component epoxy resin adhesive, urethane resin adhesive, one-component ultraviolet-sensitised curing adhesive, or one-component heating curing adhesive. The printing ink coated layer 3 is laminated between the transparent plate glass substrate 1 and inward-facing plate glass substrate 5. The reflecting rate of the above composition is about 60% for Fig. 3 and 75% for Fig. 4 and the transparency rate is about 30% for Fig. 3 and 15% for Fig. 4.

### Example 2

A second embodiment of the present invention (Fig. 5) consists of a heat ray reflecting glass structure the same as that in Example 1, except that a light-eliminating layer 6 with the same patterns as Figs. 3 or 4, or a light-passable, light-coloured or dark-coloured layer 6 with said patterns, is placed or sprayed on the surface abutting against the coating or plating layer 2 of transparent plate glass substrate 1.

Layer 6 is light-eliminating by sanding or chemical treating to obtain a diffuse mirror without reflection on the surface of outward-facing glass or sprayed with a light-passable, light-coloured or dark-coloured layer 6 having patterns corresponding to those on coating layers 2 and 3 so that outside images are reflected but the glass can be seen through.

### Example 3

A third embodiment of the present invention (Fig. 6) is identical to the embodiment of Fig. 2 in the arrangement of coating layer 2, printing ink coating layer 3 and adhesive layer 4 on the substrate 1 except that adhesive layer 4 and inward-facing glass substrate 5 are selectively adapted to be coloured, and a transparent reflecting layer 7 is placed between adhesive layer 4 and dark grey inward-facing plate glass substrate 5 or before coating or plating layer 2. Thus, besides the above-mentioned advantages, the heat insulation effect of the heat ray reflecting glass composition is higher.

## Claims

1. A heat ray reflecting glass structure, comprising an outwardly-facing transparent or translucent glass substrate (1) having an inner surface overlaid by a metal or metallic oxide layer (2), and an inwardly-facing transparent or translucent substrate (5) of glass, polyester or polycarbonate secured thereto by an adhesive layer (4), is characterised in that:-
a) said metal or metallic oxide layer (2) is composed of a plurality of individual regions (20) arranged in an array or net;
b) a black or grey printing ink layer (3) is composed of a plurality of individual regions (30) corresponding to, and overlying, said individual regions (20) of said metal or metallic oxide layer (2);
c) said inner surface of said outwardly-facing transparent or translucent glass substrate (1) has regions corresponding to crevices (10) between, and not overlaid by, said individual regions (20) of said metal or metallic oxide layer (2) and said individual regions (30) of said black or grey printing ink layer (3); and
d) said adhesive layer (4) has portions filling said crevices (10) as well as portions overlying said individual regions (30) of said black or grey printing ink layer (3).

2. A heat ray reflecting glass structure according to claim 1, characterised in that said individual regions (20) of said metal or metallic oxide layer (2), and said individual regions (30) of said black or grey printing ink layer (3), are either circular or hexagonal in shape.

3. A heat ray reflecting glass structure according to claim 1 or claim 2, characterised in that the ratio of the areas of said individual regions (20) of said metal or metallic oxide layer (2) to said crevices (10) is in the range 9:1 to 1:1, such as 6.5:3.5.

4. A heat ray reflecting glass structure according to any preceding claim, characterised in that said metal or metallic oxide layer (2) is selected from gold, silver, platinum, copper, tin, zinc, chromium, titanium, aluminium, or nickel, or alloy or oxide thereof and is from 40 to 180 nm thickness.

5. A heat ray reflecting glass structure according to any preceding claim, characterised in that said black or grey printing ink layer (3) is selected from polyvinyl butyral resin, urethane resin, epoxy resin, or methyl acrylate resin, or mixture thereof and is from 0.04 mm to 0.18 mm thickness.

6. A heat ray reflecting glass structure according to any preceding claim, characterised in that the thickness of said adhesive layer (4) is up to 50 mm.

7. A heat ray reflecting glass structure according to any preceding claim, characterised in that said adhesive layer (4) is admixed with ultraviolet absorbent and/or embedded with wires.

8. A heat ray reflecting glass structure according to any preceding claim, characterised in that said outwardly-facing substrate (1) is coated or otherwise treated in a discontinuous layer (6) and/or said inwardly-facing substrate (5) is coated or otherwise treated in a continuous layer (7) in order to achieve desired values of light reflection and/or heat insulation.

9. A heat ray reflecting glass structure according to any preceding claim, characterised in that said metal or metallic oxide layer (2) is initially applied continuously, said black or grey printing ink layer (3) is applied discontinuously thereto, and portions of said metal or metallic oxide layer (2) not covered by said black or grey printing ink layer (3) are then removed.

## Patentansprüche

1. Wärmestrahlen reflektierende Glasstruktur, enthaltend ein nach außen gerichtetes transparentes oder transluzentes Glassubstrat (1) mit einer inneren Oberfläche, die mit einer Metall- oder Metalloxidschicht (2) bedeckt ist, und ein nach innen gerichtetes transparentes oder transluzentes Substrat (5) aus Glas, Polyester oder Polycarbonat, welches daran durch eine Klebeschicht (4) befestigt ist, dadurch gekennzeichnet, daß:
a) die Metall- oder Metalloxidschicht (2) aus einer Mehrzahl einzelner Bereiche (20) zusammengesetzt ist, die regelmäßig in Reihe oder in Netzform angeordnet sind;
b) eine schwarze oder graue Drucktintenschicht (3) aus einer Mehrzahl einzelner Bereiche (30) zusammengesetzt ist, die den einzelnen Bereichen (20) der Metall- oder Metalloxidschicht (2) entsprechen und diese überlagern;
c) die innere Oberfläche des nach außen gerichteten transparenten oder transluzenten Glassubstrats (1) Bereiche aufweist, die den Spalten (10) zwischen den einzelnen Bereichen (20) der Metall- oder Metalloxidschicht (2) und den einzelnen Bereichen (30) der schwarzen oder grauen Drucktintenschicht (3) entsprechen und nicht von diesen überlagert werden; und
d) die Klebeschicht (4) Teile aufweist, welche die Spalten (10) ausfüllen, sowie Teile, welche die einzelnen Bereiche (30) der schwarzen oder grauen Drucktintenschicht (3) überlagern.

2. Wärmestrahlen reflektierende Glasstruktur gemäß Anspruch 1, dadurch gekennzeichnet, daß die einzelnen Bereiche (20) der Metall- oder Metalloxidschicht (2) und die einzelnen Bereiche (30) der schwarzen oder grauen Drucktintenschicht (3) entweder kreisförmige oder hexagonale Form aufweisen.

3. Wärmestrahlen reflektierende Glasstruktur gemäß Anspruch 1 oder Anspruch 2, dadurch gekennzeichnet, daß das Flächenverhältnis der einzelnen Bereiche (20) der Metall- oder Metalloxidschicht (2) zu den Spalten (10) im Bereich von 9:1 bis 1:1, wie 6,5:3,5, liegt.

4. Wärmestrahlen reflektierende Glasstruktur nach einem der vorhergehenden Ansprüche, dadurch gekennzeichnet, daß die Metall- oder Metalloxidschicht (2) aus Gold, Silber, Platin, Kupfer, Zinn, Zink, Chrom, Titan, Aluminium und/oder Nickel oder deren Legierung oder deren Oxid besteht und eine Dicke von 40 bis 180 nm aufweist.

5. Wärmestrahlen reflektierende Glasstruktur nach einem der vorhergehenden Ansprüche, dadurch gekennzeichnet, daß die schwarze oder graue Drucktintenschicht (3) aus Polyvinylbutyralharz, Urethanharz, Epoxidharz und/oder Methylacrylatharz oder deren Mischung besteht und eine Dicke von 0,04 mm bis 0,18 mm aufweist.

6. Wärmestrahlen reflektierende Glasstruktur nach einem der vorhergehenden Ansprüche, dadurch gekennzeichnet, daß die Klebeschicht (4) eine Dicke von bis zu 50 mm aufweist.

7. Wärmestrahlen reflektierende Glasstruktur nach einem der vorhergehenden Ansprüche, dadurch gekennzeichnet, daß der Klebeschicht (4) Ultraviolettabsorptionsmittel zugemischt ist und/oder darin Drähte eingebettet sind.

8. Wärmestrahlen reflektierende Glasstruktur nach einem der vorhergehenden Ansprüche, dadurch gekennzeichnet, daß das nach außen gerichtete Substrat (1) zu einer diskontinuierlichen Schicht (6) beschichtet oder auf andere Weise behandelt ist, und/oder daß das nach innen gerichtete Substrat (5) zu einer kontinuierlichen Schicht (7) beschichtet oder auf andere Weise behandelt ist, um die erwünschten Lichtreflektions- und/oder Wärmeisolationswerte zu erreichen.

9. Wärmestrahlen reflektierende Glasstruktur nach einem der vorhergehenden Ansprüche, dadurch gekennzeichnet, daß die Metall- oder Metalloxidschicht (2) anfänglich kontinuierlich aufgetragen wird, die schwarze oder graue Drucktintenschicht (3) darauf diskontinuierlich aufgetragen wird und dann Teile der Metall- oder Metalloxidschicht (2), die nicht von der schwarzen oder grauen Drucktintenschicht (3) bedeckt sind, entfernt werden.

## Revendications

1. Structure de verre réfléchissant les rayons thermiques, comprenant un substrat de verte transparent ou translucide (1), dirigé vers l'extérieur, ayant une surface intérieure revêtue d'une couche (2) d'un métal ou d'un oxyde métallique, et un substrat transparent ou translucide (5), dirigé vers l'intérieur, en verre, en polyester ou en polycarbonate, qui y est assujetti par une couche adhésive (4), caractérisée en ce que
a) ladite couche d'un métal ou d'un oxyde métallique (2) est constituée d'une pluralité de régions individuelles (20) disposées en tableau ou en réseau ;
b) une couche (3) d'encre d'impression noire ou grise est constituée d'une pluralité de régions individuelles (30), correspondant auxdites régions individuelles (20) constituées de ladite couche d'un métal ou d'un oxyde métallique (2) et recouvrant ces régions ;
c) ladite surface intérieure dudit substrat de verre (1), transparent ou translucide, dirigé vers l'extérieur, possède des régions correspondant à des crevasses (10) situées entre lesdites régions (20) (et non recouvertes par ces dernières) de ladite couche (2) d'un métal ou d'un oxyde métallique, et lesdites régions individuelles (30) de ladite couche (3) d'encre d'impression noire ou grise ; et
d) ladite couche adhésive (4) possède des portions remplissant lesdites crevasses (10) ainsi que les portions recouvrant lesdites régions individuelles (30) de ladite couche d'encre (3) d'impression noire ou grise.

2. Structure de verre réfléchissant les rayons thermiques selon la revendication 1, caractérisée en ce que lesdites régions individuelles (20) de ladite couche (2) d'un métal ou d'un oxyde métallique, et lesdites régions individuelles (30) de ladite couche d'encre (3) d'impression noire ou grise, ont une forme circulaire ou hexagonale.

3. Structure de verre réfléchissant les rayons thermiques selon la revendication 1 ou 2, caractérisée en ce que le rapport des aires desdites régions individuelles (20) de ladite couche (2) d'un métal ou d'un oxyde métallique à celle desdites crevasses (10) est compris entre 9:1 et 1:1, et il est par exemple de 6,5:3,5.

4. Structure de verre réfléchissant les rayons thermiques selon l'une quelconque des revendications précédentes, caractérisé en ce que ladite couche (2) d'un métal ou d'un oxyde métallique est en un matériau choisi parmi l'or, l'argent, le platine, le cuivre, l'étain, le zinc, le chrome, le titane, l'aluminium ou le nickel, ou un alliage ou un oxyde de ceux-ci, et son épaisseur est de 40 à 180 nm.

5. Structure de verre réfléchissant les rayons thermiques selon l'une quelconque des revendications précédentes, caractérisée en ce que ladite couche d'encre (3) d'impression noire ou grise est en un matériau choisi parmi les résines de polyvinylbutyral, les résines d'uréthanne, les résines époxydes ou les résines d'acrylate de méthyle, ou leurs mélanges, et a une épaisseur de 0,04 à 0,18 mm.

6. Structure de verre réfléchissant les rayons thermiques selon l'une quelconque des revendications précédentes, caractérisée en ce que l'épaisseur de ladite couche adhésive (4) peut aller jusqu'à 50 mm.

7. Structure de verre réfléchissant les rayons thermiques selon l'une quelconque des revendications précédentes, caractérisée en ce que ladite couche adhésive (4) est mélangée à un agent absorbant les ultraviolets, et/ou des fils métalliques y sont noyés.

8. Structure de verre réfléchissant les rayons thermiques selon l'une quelconque des revendications précédentes, caractérisée en ce que ledit substrat (1) dirigé vers l'extérieur est appliqué ou autrement traité sur une couche discontinue (6), et/ou ledit substrat (5) dirigé vers l'intérieur est appliqué ou autrement traité sur une couche continue (7), pour arriver aux valeurs souhaitées de la réflexion de la lumière et/ou de l'isolation thermique.

9. Structure de verre réfléchissant les rayons thermiques selon l'une quelconque des revendications précédentes, caractérisée en ce que ladite couche (2) d'un métal ou d'un oxyde métallique est initialement appliquée en continu, ladite couche d'encre (3) d'impression noire ou grise est appliquée par-dessus d'une manière discontinue, puis on enlève les portions de ladite couche (2) d'un métal ou d'un oxyde métallique qui ne sont pas recouvertes par ladite couche d'encre (3) d'impression noire ou grise.
